**Europäisches Patentamt**

**European Patent Office**

**Office européen des brevets**

(11) Publication number: **0 092 369**
**B1**

# EUROPEAN PATENT SPECIFICATION

(45) Date of publication of patent specification: **03.08.88**

(51) Int. Cl.⁴: $G\ 01\ S\ 17/58$

(21) Application number: **83302080.3**

(22) Date of filing: **13.04.83**

(54) Light frequency change detecting method and apparatus.

(30) Priority: **20.04.82 JP 66584/82**

(43) Date of publication of application:
**26.10.83 Bulletin 83/43**

(45) Publication of the grant of the patent:
**03.08.88 Bulletin 88/31**

(84) Designated Contracting States:
**DE FR GB·NL SE**

(56) References cited:
**FR-A-2 118 874**

**REVUE DE PHYSIQUE APPLIQUEE, vol. 10, no. 6, November 1975, pages 355-362, Paris, FR.**
**OPTO-ELECTRONICS, no. 4, November 1972, pages 429-437, London, GB.**

**OPTICS AND LASER TECHNOLOGY, vol. 7, no. 1, February 1975, pages 11-16, Haywards Heath, GB.**

**IEEE TRANSACTIONS ON BIO-MEDICAL ENGINEERING, vol BME-18, no. 6, November 1971, pages 416-420, New York, USA**

(73) Proprietor: **SUMITOMO ELECTRIC INDUSTRIES LIMITED**
**No. 15, Kitahama 5-chome Higashi-ku Osaka-shi Osaka 541 (JP)**

(72) Inventor: **Nishiwaki, Yoshikazu c/o Osaka Works of Sumitomo**
**Electric Industries Ltd 1-3 Shimaya 1-chome Konohana-ku Osaka (JP)**
Inventor: **Nishiura, Yozo c/o Osaka Works of Sumitomo**
**Electric Industries Ltd 1-3 Shimaya 1-chome Konohana-ku Osaka (JP)**

(74) Representative: **Rackham, Stephen Neil et al GILL JENNINGS & EVERY 53-64 Chancery Lane London WC2A 1HN (GB)**

Courier Press, Leamington Spa, England.

## Description

The present invention relates to a method and apparatus for detecting a change in the frequency of light.

A technique for detecting a frequency change of light is necessary for, for example, a velocitymeter using the Doppler effect. In general, detection of a frequency change in light is accomplished by receiving both light with the changed frequency and light of the original frequency using the same detector, performing a heterodyne detection, and then monitoring the change in the frequency using a frequency analyser such as a spectrum analyser.

However, a spectrum analyser is an expensive and voluminous piece of apparatus and a detector incorporating such spectrum analyser becomes inevitably large in size. Accordingly, there is a need for a frequency change detector which is less expensive and smaller in size and requires no spectrum analyser.

Revue De Physique Appliquee, vol. 10, no. 6, November 1975, pages 355—362, Paris, FR, EL. S. El Badawy et al., "Utilisation d'un effet acousto-optique pour l'analyse spectrale superheterodyne en diffusion de la lumiere" discloses a method of detecting a frequency change $f_d$ to which light of an initial frequency $f_o$ is subjected, comprising the steps of:

heterodyne-detecting the light whose frequency change is to be detected by mixing it with light having a reference frequency in a photoelectric receiver element,

periodically varying, prior to the step of heterodyne-detecting, the difference in frequency between the light whose frequency change is to be detected and the reference light by means of a modulator receiving a modulation signal swept in frequency, and

filtering the electric output signal from the photoelectric receiver element.

The article by P. Buchhave entitled "Laser Doppler Velocimeter with variable frequency shift" in Optics and Laser Technology, Feb, 1975, pp. 11—16 discloses a device operated in accordance with a somewhat similar method and discloses that the modulation may be applied to the frequency shifted light instead of the reference light.

According to a first aspect of this invention such a method comprises the further steps of:

using light of frequency $f_o$ as the reference light,

varying the frequency difference by modulating in the modulator the light whose frequency change is to be detected,

separately detecting portions of the reference light and the modulated light to provide auxiliary DC signals indicative of the intensities of the reference and the modulated light, respectively,

compensating the influence of the frequency characteristic of the modulator on the heterodyne-detected and filtered output signal by means of the auxiliary signals, and

monitoring the compensated output signal as a function of the modulation frequency to establish the value of the modulation frequency at which the output signal has a minimum or maximum value.

The apparatus for detecting a frequency change disclosed in the first article comprises:

a light source for generating light of frequency $f_o$,

a heterodyne detector mixing the light whose frequency change is to be detected with light of a reference frequency,

a modulator driving circuit for producing a modulation signal at a modulation frequency $f_m$ which is periodically swept,

a modulator arranged to receive the modulation signal and to establish, prior to the heterodyne detection, a periodically varying difference in frequency between the light whose frequency change is to be detected and the reference light,

a filter having a predetermined bandwidth receiving the electric output signal from the heterodyne detector, and

signal processing means for determining the frequency change from the filtered output signal.

According to a second aspect of this invention such an apparatus is characterised in that

the modulator is arranged to modulate the light whose frequency change is to be detected,

means are provided for applying to the heterodyne detector light of frequency $f_o$ as the reference light, and in that

the processing means include

(i) first and second photoelectric detectors receiving a portion of the reference light and the modulated light, respectively, and providing auxiliary signals indicative of the intensity of the reference and the modulated light, respectively,

(ii) an arithmetic circuit receiving the filtered output signal and the auxiliary signals, the arithmetic circuit being arranged to eliminate from the filtered output signal the DC components and to compensate in this signal for the influence of the frequency characteristic of the modulator, and

(iii) detector means for determining the value of the swept modulation frequency for which the output from the arithmetic circuit has a maximum value.

Particular examples of frequency change detecting in accordance with this invention will now be described and contrasted with the prior art with reference to the accompanying drawings in which:—

Figure 1 is a block diagram of a conventional laser Doppler velocitymeter;

Figure 2 is an example of a laser Doppler velocitymeter;

Figure 3 is a graph showing the relationship between the Doppler frequency and the velocity with the angle θ between the direction of movement of the object to be measured and the direction of the laser beam;

Figure 4 is a block diagram of an example of the present invention which eliminates the frequency characteristic of the diffraction efficiency of an acoustooptic modulator; and,

Figure 5 is a block diagram of an essential part of a further example of the present invention in which a high pass filter is used.

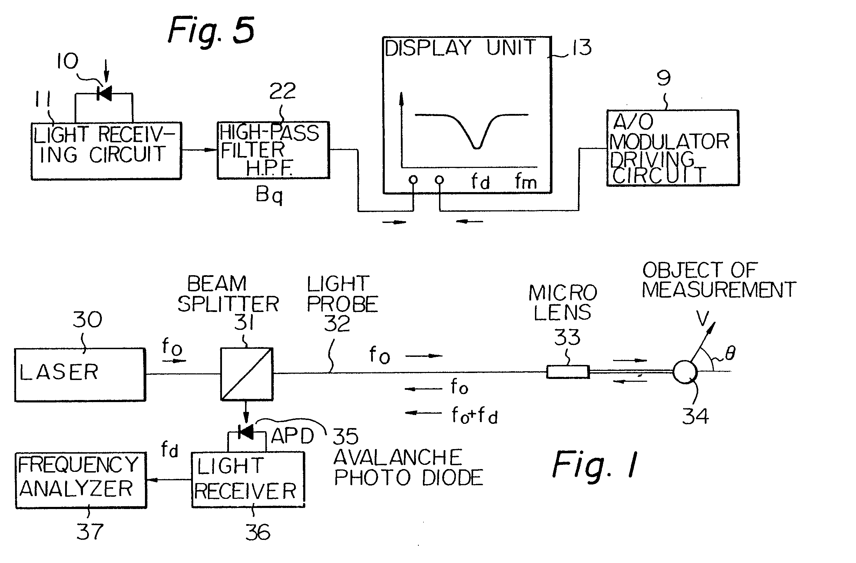

Fig. 1 illustrates a schematic construction of a conventional optical fiber laser Doppler velocitymeter. In a laser Doppler velocitymeter when a laser beam of frequency $f_o$ strikes a moving object 34, a frequency of the light scattered therefrom is shifted by frequency $f_d$ from an original frequency $f_o$ of the incident light by Doppler effect. The shift $f_d$ in frequency is called Dopper frequency. The Dopper frequency $f_d$ is given by the following formula:

$$f_d = \frac{1}{2\pi}(\vec{K_s} - \vec{K_o})\vec{V} \qquad (1)$$

where
$\vec{V}$: velocity vector of the moving object 34
$\vec{K_o}$: velocity vector of incident light
$\vec{K_s}$: velocity vector of scattered light

The velocity V of the object 34 can be obtained by measuring the Doppler frequency $f_d$. A velocitymeter utilizing Doppler effect and using optical fibers as light transmission lines and a signal pickup probe is called "Optical Fiber Laser Doppler Velocitymeter".

In Fig. 1, a laser 30 is a He—Ne laser having a wavelength of 632.8 mm. A light beam from the laser 30 is guided to a light probe 32 and an avalanche photo diode 35 through a beam splitter 31. The light probe 32 comprises an optical fiber having a refractive index distribution type micro lens 33 mounted at an end. The micro lens 33 is 1—2 mm in diameter and 5—6 mm in length. Most of the light guided within the light probe 32 is emitted out of the light probe as a substantially non-divergent light beam and so as to focus in the forward direction of the light probe. This light strikes a moving object of measurement 34. The object 34 scatters the light. The scattered light is shifted in frequency by Doppler effect into the frequency $(f_o + f_d)$. The light probe 32 picks up a portion of the scattered light.

On the other hand, the light Fresnel-reflected at the end of the light probe is used as a reference light having the original frequency $f_o$. The scattered light $(f_o + f_d)$ and the reference light $(f_o)$ return within the light probe 32 and are guided into the avalanche photo diode 35 through the beam splitter 31 and the optical fiber. The avalanche photo diode 35 performs heterodyne detection of the scattered light $(f_o + f_d)$ and the reference light $(f_o)$. An output signal of the heterodyne detection has frequency which is equal to beat frequency of the reference light and the scattered light, that is, equal to the Doppler frequency $f_d$. The relation of the Doppler frequency $f_d$ with the back-scattered light is obtained by rewriting formula (1) as follows:

$$f_d = \frac{2V}{\lambda}\cos\theta \qquad (2)$$

where,
V: velocity of the object of measurement
θ: angle between the light transmitted from the light probe and the velocity direction of the object of measurement
λ: wavelength of the laser light

The frequency $f_d$ is obtained from the signal of a light receiver 36 by a frequency analyser 37, to thereby determine the velocity V of the object of measurement. In the conventional method for detecting a frequency change of a light, as described above, a frequency analyser such as a spectrum analyser was used after heterodyne detection.

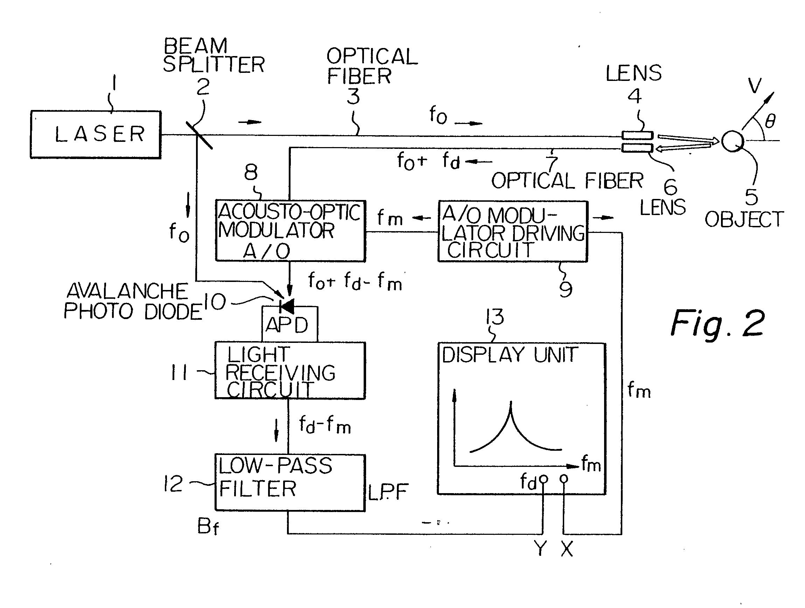

Fig. 2 is a block diagram of an example of a laser Doppler velocitymeter. A laser 1 is, for example, a He—Ne laser of wavelength 632.8 nm. A laser light of frequency $f_o$ is passed through a beam splitter 2, a light transmitting optical fiber 3, and a lens 4, and is incident upon an object of measurement 5. The object 5 is moving at a velocity V at an angle θ with respect to the direction of incidence. The back-scattered light from the object of measurement has been subject to Doppler shift to have a frequency $(f_o + f_d)$. The back-scattered light is used as a signal light. The signal light returns through a lens 6 and a light receiving optical fiber 7. An acousto-optic modulator 8 modulates the signal light, with the modulation frequency $f_m$ into the signal light having the frequency $(f_o + f_d - f_m)$. An acousto-optic modulator driving circuit 9 oscillates and amplifies the modulation frequency $f_m$ and drives the acousto-optic modulator 8.

The acousto-optic modulator itself is publicly known. When a light is transmitted at an adequate angle through a liquid or solid medium which is transparent to light and through which an ultrasonic wave is propagated and the refractive index of the medium is varied periodically with time, the light is diffracted. At this time, the frequency of the light is shifted by the number of vibration of the ultrasonic wave. The modulated signal light $(f_o+f_d-f_m)$ and the reference light $f_o$ divided by the beam splitter 2 are incident to an avalanche photo diode 10. Since the avalanche photo diode 10 and a light receiving circuit 11 perform heterodyne detection, an electrical signal having the frequency which is a difference $(f_d-f_m)$ in frequency between the signal light and the reference light is obtained. This electrical signal is passed to a low-pass filter 12. An output of the filter is obtained only when the differential frequency $(f_d-f_m)$ exists in the pass band of the filter.

The acousto-optic modulator driving circuit 9 varies the modulation frequency $f_m$. The modulation frequency $f_m$ is continuously varied to check the amplitude of the output signal of the filter 12. Since passing through the low-pass filter, when the amplitude of the output signal is the largest, the following equation holds:

$$f_d-f_m=0 \tag{3}$$

The modulation frequency at this time provides the Doppler frequency. Determination of the modulation frequency $f_m$ at which the amplitude is the largest is made possible simply by using an oscilloscope or the like. A display unit 13 for expressing the modulation frequency $f_m$ in the horizontal axis and the amplitude of the output signal after passage through the filter in the vertical axis is used here. A peak of the curve of $f_m$-amplitude expressed in the display unit 13 provides the Doppler frequency $f_d$.

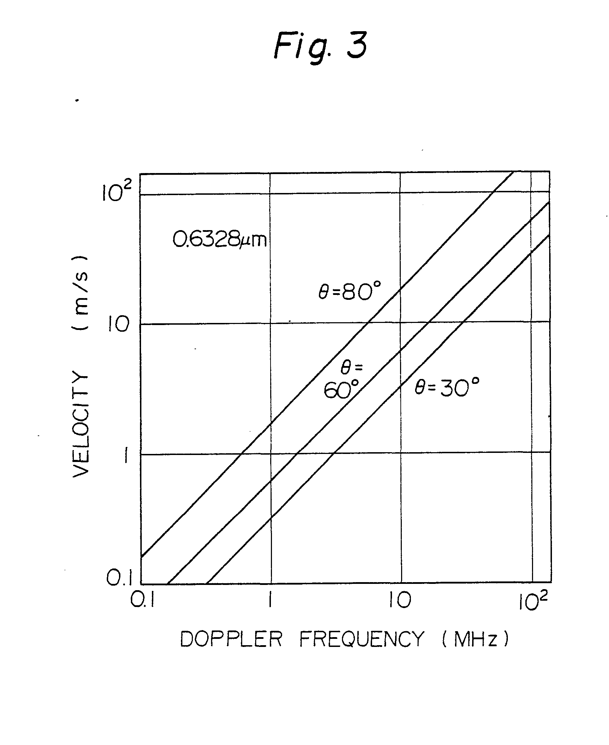

The relationship between the Doppler frequency $f_d$ and the velocity V of the object of measurement has been given hereinabove by formulas (1) and (2). Fig. 3 shows the relationship between the Doppler frequency $f_d$ and the velocity V when the angle $\theta$ is 30°, 60° and 80°, respectively, in a He—Ne laser of wavelength 0.6328 μm. Since the velocity V is proportional to the Doppler frequency $f_d$, the relationship between $f_d$ and V is expressed by a straight line in a logarithmic graph. For example, in the case of $\theta=80°$, assuming $f_d=f_m$ at 9 MHz, the velocity V is found to be 16 m/sec. In sweeping the modulation frequency $f_m$, since the display unit 13 clearly showing the relationship between the modulation frequency and the amplitude is used, it is easy to find out the peak amplitude even when the band of the filter 12 is broad.

The acousto-optic modulator 8 has a band extending aspproximately 10 MHz above and below the central frequency of several tens MHz. However, the band can be easily windened by beam steering or the like method. The range of the velocity that can be measured is increased in the upper and lower limits by the increase in the band of the modulation frequency $f_m$. However, the band of the low-pass filter 12 is not necessarily enlarged because the object is to find out the point at which $f_m-f_d=0$. The display unit 13 for detecting the peak amplitude can be done without by evaluating the magnitude of the Doppler frequency $f_m$ simply by presence or absence of the output of the filter 12. In case the band of the low-pass filter 12 is, for example, 1 MHz, the range of error of the detected velocity is ±1 m/sec. When the band of the low-pass filter 12 is 1 KHz, the range of error of the detected velocity is ±1 mm/sec. That is, the measuring accuracy of the velocity is increased by narrowing the band of the low-pass filter 12. The foregoing is the explanation of the application of the method according to the present invention to a Doppler velocitymeter.

Since the electrical signal $(f_d-f_m)$ is passed to the low-pass filter 12 to detect the peak amplitude, if a frequency characteristic $\eta(\omega_m)$ of the acousto-optic modulator 8 is unusual, it is possible that the frequency characteristic affects the amplitude of the electrical signal $(f_d-f_m)$ and the amplitude of the output of the filter does not assume the peak when $f_d-f_m=0$, as will be described in detail below.

When the signal light $(f_o+f_d-f_m)$ and the reference light $f_o$ are received by the avalanche photo diode 10 and subjected to heterodyne detection, the output is expressed by the following formula:

$$\mid \eta(\omega_m)E_1e^{i(\omega_o+\omega_d+\omega_m)t}+E_2e^{i\omega ot}\mid^2$$

$$=\eta^2(\omega_m)E_1^2+E_2^2+2\eta(\omega_m)E_1E_2\cos(\omega_d-\omega_m)t \tag{4}$$

where, $\eta(\omega_m)$ denotes the frequency characteristic of diffraction efficiency of the acousto-optic modulator, $E_1$ and $E_2$ denote the amplitudes of the signal light and the reference light, respectively, and $\omega_o$, $\omega_d$ and $\omega_m$ denote angular frequencies of the reference light, the Doppler shift and the modulation signal, respectively. A DC component $(\eta^2E_1^2+E_2^2)$ is included in the output. While the amplitudes $E_1$ and $E_2$ are constant, the frequency characteristic $\eta(\omega_m)$ varies when the modulation frequency $f_m$ is swept. The band of the low-pass filter is denoted by $B_f$. Then, an AC component $\cos(\omega_d-\omega_m)$ passes the filter when $\mid \omega_d-\omega_m \mid <B_f$. Since the characteristic $\eta(\omega_m)$ of the modulator is provided to both the BC component and the AC component, and since the DC component is always larger than the AC component, it is possible that the output of the low-pass filter 12 assumes the largest value for the value $\omega_m$ which makes the value $\eta(\omega_m)$ large.

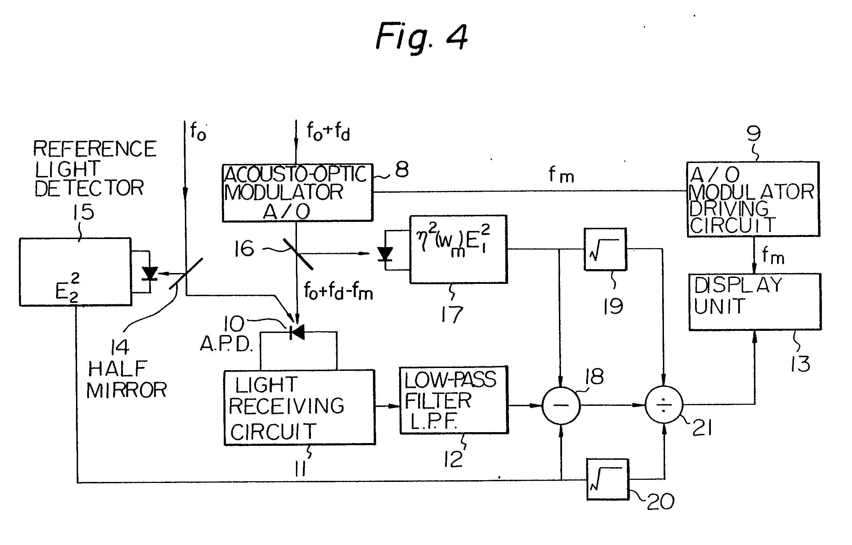

In such occasion, a circuit of more refined construction as shown in Fig. 4 is preferred. In the circuit shown in Fig. 4, a half mirror 14 is placed in the passage of the reference light and the intensity $E_2^2$ of the reflected light is detected by a reference light detector 15. A portion of the modulated signal light is taken by a half mirror 16 and the DC component $\eta^2(\omega_m)E_1^2$ of the signal light is detected by the detecting circuit 17 which detects DC components of the signal light. The signal light is, as in the example described above, received by the avalanche photo diode 10 and subjected to heterodyne detection, and the electrical signal of formula (4) appears at the output of the light receiving circuit 11. This electrical signal is passed into the low-pass filter 12. Instead of being displayed directly in the display unit 13, this electrical signal is applied to a subtracting circuit 18 in which the reference light $E_2{}^2$ and DC component of the signal light $\eta^2(\omega_m)E_1{}^2$ are subtracted from the electrical signal. Accordingly, the DC component is eliminated to leave only the component defined by the following formula (5):

$$2\eta(\omega_m)E_1E_2\cos(\omega_d-\omega_m)t \qquad (5)$$

A square root computing circuit 19 computes the square root of the DC component of the signal light and obtains it as follows:

$$\eta(\omega_m)E_1 \qquad (6)$$

Likewise, a square root computing circuit 20 computes the square root of the reference light intensity to be as follows:

$$E_2 \qquad (7)$$

A dividing circuit 21 divides the formula (5), which is the output of the subtracting circuit 18 by the formulas (6) and (7), to thereby obtain the AC component expressed by the following formula (8):

$$\cos(\omega_d-\omega_m)t \qquad (8)$$

This is constant in amplitude and independent from the diffraction efficiency characteristic $\eta(\omega_m)$. That which provides the largest amplitude when displayed in the unit 13 is always $\omega_d-\omega_m=0$. Therefore, it is made possible to eliminate the error by the diffraction efficiency characteristic $\eta(\omega_m)$ completely. While the example shown in Fig. 4 has been described above as using a low-pass filter, a high-pass filter may be used in place of the low-pass filter.

Fig. 5 shows an essential portion of a circuit construction incorporating a high-pass filter 22. An electrical signal including the AC component and DC component of the frequency $(f_d-f_m)$ is applied from the light receiving circuit 11 to the high-pass filter 22. The DC component is completely interrupted while the AC component is allowed to pass the filter 22 when the frequency $(f_d-f_m)$ is larger than the lower limit frequency of the high-pass filter 22. When the frequency $(f_d-f_m)$ is in the blocking band $B_q$ of the high-pass filter 22, both the DC and the AC components are stopped, whereby the filter output reduces. The filter output is the smallest when $f_d=f_m$.

The method according to the present invention can be applied not only to Doppler velocitymeters but also to all cases where it is desired to detect change in frequency of a light. It is essential that the frequency change $f_d$ of light is added thereto with the modulation frequency and subjected to heterodyne detection and that the point whereat $f_m-f_d$ is obtained while varying the modulation frequency $f_m$. The present invention provides a light frequency change detector which is inexpensive and small in size because no spectrum analyser is required. Further, the present invention is applicable to a laser Doppler velocitymeter, a ring laser gyro, and the like.

## Claims

1. A method of detecting a frequency change $f_d$ to which light of an initial frequency $f_o$ is subjected, comprising the steps of:

heterodyne-detecting the light whose frequency change is to be detected by mixing it with light having a reference frequency in a photoelectric receiver element,

periodically varying, prior to the step of heterodyne-detecting, the difference in frequency between the light whose frequency change is to be detected and the reference light by means of a modulator receiving a modulation signal swept in frequency, and

filtering the electric output signal from the photoelectric receiver element,

the method being characterised by the further steps of:

using light of frequency $f_o$ as the reference light,

varying the frequency difference by modulating in the modulator the light whose frequency change is to be detected,

separately detecting portions of the reference light and the modulated light to provide auxiliary DC signals indicative of the intensities of the reference and the modulated light, respectively,

compensating the influence of the frequency characteristic of the modulator on the heterodyne-detected and filtered output signal by means of the auxiliary signals, and

monitoring the compensated output signal as a function of the modulation frequency to establish the value of the modulation frequency at which the output signal has a minimum or maximum value.

2. A method of detecting a frequency change according to claim 1, in which the output signal is filtered in a low-pass filter (12) and in which the modulation frequency $f_m$ at which the amplitude of the filter output is the largest is detected or in which the output signal is filtered in a high-pass filter and in which the modulation frequency $f_m$ at which the amplitude of the filter output is the smallest is detected.

3. An apparatus for detecting a frequency change $f_d$ to which light of an initial frequency $f_o$ is subjected, the apparatus comprising:

a light source (1) for generating light of frequency $f_o$,

a heterodyne detector (10, 11) mixing the light whose frequency change is to be detected with light of a reference frequency,

a modulator driving circuit (9) for producing a modulation signal at a modulation frequency $f_m$ which is periodically swept,

a modulator (8) arranged to receive the modulation signal and to establish, prior to the heterodyne detection, a periodically varying difference in frequency between the light whose frequency change is to be detected and the reference light,

a filter (12) having a predetermined bandwidth receiving the electric output signal from the heterodyne detector, and

signal processing means (13 to 21) for determining the frequency change from the filtered output signal, characterised in that

the modulator (8) is arranged to modulate the light whose frequency change is to be detected,

means (2) are provided for applying to the heterodyne detector light of frequency $f_o$ as the reference light, and in that

the processing means include

(i) first and second photoelectric detectors (15, 17) receiving a portion of the reference light and the modulated light, respectively, and providing auxiliary signals indicative of the intensity of the reference and the modulated light, respectively,

(ii) an arithmetic circuit (18 to 21) receiving the filtered output signal and the auxiliary signals, the arithmetic circuit being arranged to eliminate from the filtered output signal the DC components and to compensate in this signal for the influence of the frequency characteristic of the modulator, and

(iii) detector means (13) for determining the value of the swept modulation frequency for which the output from the arithmetic circuit has a maximum value.

4. An apparatus for detecting a frequency change according to claim 3, in which the arithmetic circuit includes a subtracting circuit (18), two square root computing circuits (19, 20) and a dividing circuit (21).

5. An apparatus for detecting a frequency change according to claim 3 or 4, in which the detector means is a display device (13) or an oscilloscope (13).

6. An apparatus for detecting a frequency change according to any one of claims 3 to 5, in which the modulator is an acousto-optic modulator (8).

**Patentansprüche**

1. Verfahren zum Erfassen einer Frequenzänderung $f_d$, der Licht mit einer anfänglichen Frequenz $f_o$ unterworfen wird, mit den Verfahrensschritten:

Erfassen des Lichts, dessen Frequenzänderung erfaßt werden soll, durch Überlagerung, indem dieses mit Licht mit einer Bezugsfrequenz in einem fotoelektrischen Empfangselement gemischt wird,

periodisches Ändern der Frequenzdifferenz zwischen dem Licht, dessen Frequenzänderung erfaßt werden soll, und dem Bezugslicht mittels eines Modulators, der ein gewobbeltes Modulationssignal empfängt, vor dem Schritt der Überlagerungserfassung und

Filtern des elektrischen Ausgangssignals des fotoelektrischen Empfangselements,

wobei das Verfahren durch folgende weitere Schritte gekennzeichnet ist:

Verwenden von Licht mit der Frequenz $f_o$ als Bezugslicht,

Ändern der Frequenzdifferenz, indem im Modulator das Licht moduliert wird, dessen Frequenzänderung erfaßt werden soll,

separates Erfassen von Teilen des Bezugslichts und des modulierten Lichts, um Gleichstromhilfssignale zu erzeugen, die auf die Intensitäten des Bezugslichts bzw. des modulierten Lichts hinweisen,

Kompensieren des Einflusses des Frequenzganges des Modulators auf das durch Überlagerung erfaßte und gefilterte Ausgangssignal mittels der Hilfssignale und Anzeigen des kompensierten Ausgangssignals als eine Funktion der Modulationsfrequenz, um den Wert der Modulationsfrequenz festzustellen, bei dem das Ausgangssignal einen minimalen oder maximalen Wert aufweist.

2. Verfahren zum Erfassen einer Frequenzänderung nach Anspruch 1, bei dem das Ausgangssignal in einem Tiefpaßfilter (12) gefiltert und bei dem die Modulationsfrequenz $f_m$ erfaßt wird, bei der die Amplitude des Filterausgangs am größten ist, oder bei dem das Ausgangssignal in einem Hochpaßfilter gefiltert und bei dem die Modulationsfrequenz $f_m$ erfaßt wird, bei der die Amplitude des Filterausgangs am kleinsten ist.

3. Vorrichtung zum Erfassen einer Frequenzänderung $f_d$, der Licht mit einer anfänglichen Frequenz $f_o$ unterworfen wird, mit

einer Lichtquelle (1) zum Erzeugen von Licht mit der Frequenz $f_o$,

einem Überlagerungsdetektor (10, 11) zum Mischen des Lichts, dessen Frequenzänderung erfaßt werden soll, mit Licht mit einer Bezugsfrequenz,

einer Modulatortreiberschaltung (9) zum Erzeugen eines Modulationssignals bei einer Modulationsfrequenz $f_m$, die periodisch gewobbelt wird,

einem Modulator (8), der zum Empfang des Modulationssignals und vor der Überlagerungserfassung zum Erzeugen einer sich periodisch ändernden Frequenzdifferenz zwischen dem Licht, dessen Frequenzänderung erfaßt werden soll, und dem Bezugslicht angeordnet ist,

einem Filter (12) mit vorbestimmter Bandbreite, das das elektrische Ausgangssignal vom Überlagerungsdetektor empfängt, und

einer Signalverarbeitungseinrichtung (13 bis 21) zur Bestimmung der Frequenzänderung aus dem gefilterten Ausgangssignal, dadurch gekennzeichnet,

daß der Modulator (8) zum Modulieren des Lichts angeordnet ist, dessen Frequenzänderung erfaßt werden soll, daß Mittel (2) zum Zuführen von Licht mit der Frequenz $f_o$ als Bezugslicht zum Überlagerungsdetektor vorgesehen sind und

daß die Verarbeitungseinrichtung umfaßt:

(i) einen ersten und einen zweiten fotoelektrischen Detektor (15, 17), die einen Teil des Bezugslichts bzw, des modulierten Lichts empfangen und Hilfssignale vorsehen, die auf die Intensität des Bezugslichts bzw. des modulierten Lichts hinweisen,

(ii) eine Rechenschaltung (18 bis 21), die das gefilterte Ausgangssignal und die Hilfssignale empfängt, wobei die Rechenschaltung angeordnet ist, um die Gleichstromkomponenten aus dem gefilterten Ausgangssignal zu beseitigen und in diesem Signal den Einfluß des Frequenzganges des Modulators zu kompensieren, und

(iii) eine Detektoreinrichtung (13) zum Bestimmen des Werts der gewobbelten Modulationsfrequenz, für den die Ausgangsgröße der Rechenschaltung einen maximalen Wert aufweist.

4. Vorrichtung zum Erfassen einer Frequenzänderung nach Anspruch 3, bei der die Rechenschaltung eine Subtrahierschaltung (18), zwei Quadratwurzel-Berechungschaltungen (19, 20) und eine Divisionsschaltung (21) aufweist.

5. Vorrichtung zum Erfassen einer Frequenzänderung nach Anspruch 3 oder 4, bei der die Detektoreinrichtung eine Anzeigeeinrichtung (13) oder ein Oszilloskop (13) darstellt.

6. Vorrichtung zum Erfassen einer Frequenzänderung nach einem der Ansprüche 3 bis 5, bei der der Modulator ein akusto-optischer Modulator (8) ist.

## Revendications

1. Un procédé de détection d'un changement de fréquence ($f_d$) auquel de la lumière d'une fréquence initiale ($f_o$) est soumise, comprenant les étapes de:

la détection hétérodyne de la lumière dont le changement de fréquence doit être détecté en la mélangeant avec de la lumière ayant une fréquence de référence dans un élément récepteur photoélectrique,

varier périodiquement, avant l'étape de détection hétérodyne, la différence en fréquence entre la lumière dont le changement de fréquence doit être détecté et la lumière de référence au moyen d'un modulateur recevant un signal de modulation balayé en fréquence, et

filtrer le signal de sortie électrique de l'élément récepteur photoélectrique,

le procédé étant caractérisé par les autres étapes de:

utiliser de la lumière de fréquence ($f_o$) comme la lumière de référence,

varier la différence de fréquence en modulant dans le modulateur la lumière dont le changement de fréquence doit être détecté,

détecter séparément les parties de la lumière de référence et de la lumière modulée pour produire des signaux continus auxiliaires représentatifs des intensités des lumières de référence et modulée, respectivement,

compenser l'influence de la caractéristique de fréquence du modulateur sur le signal de sortie détecté hétérodyne et filtre au moyen des signaux auxiliaires, et

contrôler le signal de sortie compensé comme une fonction de la fréquence de modulation pour établir la valeur de la fréquence de modulation à laquelle le signal de sortie a une valeur minimum ou maximum.

2. Un procédé de détection d'un changement de fréquence selon la revendication 1, dans lequel le signal de sortie est filtré dans un filtre passe-bas (12) et dans lequel la fréquence de modulation ($f_m$) à laquelle l'amplitude de la sortie du filtre est la plus grande est détectée ou dans lequel ls signal de sortie est filtré dans un filtre passe-haut et dans lequel la fréquence de modulation ($f_m$) à laquelle l'amplitude de la sortie du filtre est la plus petite est détectée.

3. Un dispositif pour détecter un changement de fréquence ($f_d$) auquel de la lumière d'une fréquence initiale ($f_o$) est soumise, le dispositif comprenant:

une source de lumière (1) pour produire de la lumière de fréquence ($f_o$),

un détecteur hétérodyne (10, 11) mélangeant la lumière dont le changement de fréquence doit être détecté avec de la lumière d'une fréquence de référence,

un circuit d'attaque d'un modulateur (9) pour produire un signal de modulation à une fréquence de modulation ($f_m$) qui est périodiquement balayée,

un modulateur (8) agencé pour recevoir le signal de modulation et pour établir, avant la détection hétérodyne, une différence variant périodiquement en fréquence entre la lumière dont le changement de fréquence doit être détecté et la lumière de référence,

un filtre (12) ayant une largeur de bande prédéterminée recevant le signal de sortie électrique du détecteur hétérodyne, et

un moyen de traitement du signal (13 à 21) pour déterminer le changement de fréquence du signal de sortie filtré,

caractérisé en ce que

le modulateur (8) est agencé pour moduler la lumière dont le changement de fréquence doit être détecté,

des moyens (2) sont prévus pour appliquer au détecteur hétérodyne de la lumière de fréquence ($f_o$) comme lumière de référence, et en ce que

le moyen de traitement comprend

(i) des premier et second détecteurs photoélectriques (15, 17) recevant une partie de la lumière de référence et de la lumière modulée, respectivement, et produisant des signaux auxiliaires représentatifs de l'intensité de la lumière de référence et de la lumière modulée, respectivement,

(ii) un circuit arithmétique (18 à 21) recevant le signal de sortie filtré et les signaux auxiliaires, le circuit arithmétique étant agencé pour éliminer du signal de sortie filtré les composantes continues et pour compenser dans ce signal l'influence de la caractéristique de fréquence du modulateur, et

(iii) un moyen détecteur (13) pour déterminer la valeur de la fréquence de modulation balayée pour laquelle la sortie du circuit arithmétique a une valeur maximum.

4. Un dispositif pour détecter un changement de fréquence selon la revendication 3, dans lequel le circuit arithmétique comprend un circuit de soustraction (18), deux circuits de calcul de racine carrée (19, 20) et un circuit diviseur (21).

5. Un dispositif pour détecter un changement de fréquence selon la revendication 3 ou 4, dans lequel le moyen détecteur est un dispositif de visualisation (13) ou un oscilloscope (13).

6. Un dispositif pour détecter un changement de fréquence selon l'une des revendications 3 à 5, dans lequel le modulateur est un modulateur acousto-optique (8).

## Fig. 5

LIGHT RECEIV-ING CIRCUIT (11) [10]

→ HIGH-PASS FILTER H.P.F. (22) Bq

→ DISPLAY UNIT (13)

$f_d$   $f_m$

→ A/O MODULATOR DRIVING CIRCUIT (9)

## Fig. 1

LASER (30) → $f_o$ → BEAM SPLITTER (31) → LIGHT PROBE (32) → $f_o$ →

$f_o$ ←

$f_o + f_d$ ←

MICRO LENS (33)

OBJECT OF MEASUREMENT

$V$   $\theta$ (34)

FREQUENCY ANALYZER (37) ← $f_d$ LIGHT RECEIVER (36) ← APD (35) AVALANCHE PHOTO DIODE

0 092 369

Fig. 2

0 092 369

Fig. 3

## Fig. 4

REFERENCE
LIGHT
DETECTOR
15

$E_2^2$

14
HALF
MIRROR

$f_o$

$f_o + f_d$

ACOUSTO-OPTIC
MODULATOR
A/O

8

16

$f_o + f_d - f_m$

10
A.P.D.

LIGHT
RECEIVING
CIRCUIT

11

$\eta^2(w_m)E_1^2$

17

LOW-PASS
FILTER
L.P.F.

12

18

$\sqrt{\phantom{x}}$

19

20

21

$f_m$

A/O
MODULATOR
DRIVING
CIRCUIT

9

$f_m$

DISPLAY
UNIT

13

0 092 369